# EUROPÄISCHE PATENTSCHRIFT

(11) **EP 2 820 261 B1**
(45) Veröffentlichungstag und Bekanntmachung des Hinweises auf die Patenterteilung: **23.11.2016**
(21) Anmeldenummer: 13706978.7
(22) Anmeldetag: 26.02.2013
(51) Int. Cl.: F01N 3/20, F01N 11/00

(54) **FÖRDEREINHEIT FÜR EIN FLÜSSIGES ADDITIV ZUR ABGASNACHBEHANDLUNG**
DELIVERY MODULE FOR A LIQUID ADDITIF FOR USE IN AN EXHAUST GAS POST TREATMENT SYSTEM
AGENCEMENT DE DOSAGE POUR UN ADDITIF LIQUIDE POUR UN SYSTÈME DE RETRAITEMENT DES GAZ D'ÉCHAPPEMENT

(30) Priorität: 02.03.2012 DE 102012004269
(43) Veröffentlichungstag der Anmeldung: 07.01.2015
(73) Patentinhaber: Continental Automotive GmbH, 30165 Hannover (DE)
(72) Erfinder: HODGSON, Jan, 53840 Troisdorf (DE); KONIECZNY, Jörg-Roman, 53804 Much (DE)
(86) Internationale Anmeldenummer: PCT/EP2013/053838
(87) Internationale Veröffentlichungsnummer: WO 2013/127804

(56) Entgegenhaltungen:
- EP-A1- 1 473 447
- EP-A1- 2 341 224
- WO-A1-2011/064050
- DE-A1-102009 041 938
- DE-A1-102009 055 716

## Beschreibung

Die Erfindung betrifft eine Fördereinheit zur Förderung eines flüssigen Additivs aus einem Tank. Die Fördereinheit kann insbesondere dazu genutzt werden, ein flüssiges Additiv in eine Abgasbehandlungsvorrichtung einer Verbrennungskraftmaschine zu fördern. Insbesondere im Kraftfahrzeugbereich sind Abgasbehandlungsvorrichtungen verbreitet, in welchen Abgasreinigungsverfahren durchgeführt werden, bei denen dem Abgas ein flüssiges Additiv (Oxidationsmittel wir Kraftstoff und/oder Reduktionsmittel) zugeführt wird.

Ein vielfach eingesetztes Verfahren ist das Verfahren der selektiven katalytischen Reduktion (SCR), bei welchem Stickstoffoxidverbindungen im Abgas unter Zuhilfenahme eines Reduktionsmittels reduziert werden. Als Reduktionsmittel wird typischerweise Ammoniak eingesetzt. Ammoniak wird im Kraftfahrzeugen normalerweise nicht direkt selbst bevorratet, sondern in Form einer flüssigen Reduktionsmittelvorläuferlösung, welche abgasextern in einem dafür vorgesehenen Reaktor und/oder innerhalb des Abgasstroms in der Abgasbehandlungsvorrichtung zu Ammoniak umgesetzt werden kann. Die Reduktionsmittelvorläuferlösung ist dann das flüssige Additiv. Eine häufig eingesetzte Reduktionsmittelvorläuferlösung ist wässrige Harnstoff-Lösung, welche mit einem Harnstoffgehalt von 32,5 % unter dem Handelsnamen AdBlue^{®} erhältlich ist. Die Begriffe Reduktionsmittel und Reduktionsmittelvorläuferlösung werden im Folgenden synonym füreinander verwendet und sind von dem Begriff "Additiv" erfasst.

Zur Bevorratung von flüssigen Additiven sind in Kraftfahrzeugen normalerweise zusätzliche bzw. separate Tanks vorgesehen. Um das flüssige Reduktionsmittel aus den Tanks zu einer Abgasbehandlungsvorrichtung zu transportieren, ist eine separate Fördereinheit vorgesehen. Gewünscht sind Fördereinheiten, welche direkt in den Tank für das flüssige Additiv mit eingebaut sind. Derartige Fördereinheiten sind besonders kostengünstig und zweckmäßig aufgebaut, weil zusätzliche Leitungen und/oder Rohre zur Entnahme des flüssigen Additivs aus dem Tank vermieden werden können. Eine derartige Fördereinheit ist bspw. aus der WO 2011/085830 A1 bekannt.

Weiter ist vorteilhaft, wenn eine derartige Fördereinheit in einen Tankboden eingelassen ist. Außerdem ist oft gewünscht, dass eine derartige Fördereinheit auch mit einem Füllstandsensor ausgestattet ist, mit welchem ein Füllstand von flüssigem Additiv im Tank ermittelt bzw. überwacht werden kann. Problematisch hierbei ist, dass eine Version der Fördereinheit für verschiedene Tanks eingesetzt werden soll. Für verschiedene Anwendungen (beispielsweise für unterschiedliche Kraftfahrzeugmodelle) sind häufig unterschiedliche Tanks notwendig, weil die notwendige Menge an flüssigem Additiv für verschiedene Anwendungen unterschiedlich ist und/oder weil der verfügbare Bauraum für den Tank unterschiedlich ist. Deshalb wäre es wünschenswert, wenn eine (einzelne) Konfiguration der Fördereinheit für verschiedene Gestaltungsformen von Tanks verwendbar ist. Die Fördereinheit mit einem Füllstandsensor sollte daher so ausgestaltet sein, dass die den Füllstand im Tank unabhängig von der Größe und insbesondere der Bauhöhe des Tanks erkennen kann.

Eine weitere Schwierigkeit bei der Gestaltung von Fördereinheiten für flüssiges Additiv ist, dass in Kraftfahrzeugen typischerweise eingesetzten flüssigen (wässrigen) Additive bei niedrigen Temperaturen einfrieren können. Das oben beschriebene flüssige Additiv AdBlue^{®} friert beispielsweise bei Temperaturen von ca. -11 °C ein. Derartige niedrige Temperaturen können im Kraftfahrzeugbereich insbesondere während langer Stillstandszeiten des Kraftfahrzeugs (vor allem im Winter) auftreten. Eine Fördereinheit sollte daher so gestaltet sein, dass sie einerseits dem durch das Einfrieren des Reduktionsmittels auftretenden Eisdruck bzw. die damit einhergehende Volumenexpansion des Additivs standhält. Außerdem sollte die Fördereinheit erkennen können, ob Eis in dem Tank vorliegt, weil dann vielfach keine Förderung von flüssigem Additiv aus dem Tank hinaus möglich ist.

Aus den Schriften DE 10 2009 041 938 A1, EP 2 341 224 A1 und EP 1 473 447 A1 sind jeweils Tanks für Reduktionsmittel bekannt in welchen eine Füllstandsbestimmung mit Hilfe eines Ultraschallsensors erfolgt, wobei zusätzlich jeweils ein Temperatursensor vorgesehen ist, um zu erkennen, ob gefrorenes Reduktionsmittel in dem Tank vorliegt.

Hiervon ausgehend ist es Aufgabe der hier vorliegenden Erfindung, die im Zusammenhang mit dem Stand der Technik geschilderten technischen Probleme zu lindern oder sogar zu lösen. Es soll insbesondere eine gegenüber dem Stand der Technik besonders vorteilhafte Fördereinheit zur Förderung eines flüssigen Additivs angegeben werden, die insbesondere im Hinblick auf die Bestimmung des Füllstandes und des sicheren Betriebes verbessert ist. Weiterhin soll ein besonders vorteilhaftes Verfahren zur Bestimmung einer Füllmenge an flüssigem Additiv in einem Tank beschrieben werden, das insbesondere auf die Situation des Einfrierens/Auftauens des flüssigen Additivs angepasst ist.

Diese Aufgaben werden gelöst mit einer Fördereinheit gemäß den Merkmalen des Patentanspruchs 1 und mit einem Verfahren gemäß den Merkmalen des Patentanspruchs 9. Weitere vorteilhafte Ausgestaltungen der Erfindung sind in den abhängig formulierten Patentansprüchen angegeben. Die in den Patentansprüchen einzeln aufgeführten Merkmale sind in beliebiger, technologisch sinnvoller, Weise miteinander kombinierbar und können durch Sachverhalte aus der Beschreibung ergänzt werden, wobei weitere Ausführungsvarianten der Erfindung aufgezeigt werden.

Die Erfindung betrifft eine Fördereinheit zur Förderung eines flüssigen Additivs aus einem Tank, welche in dem Tank montiert werden kann. Die Fördereinheit weist einen Füllstandsensor auf, welcher Wellen abstrahlen und empfangen kann, die an einer Flüssigkeitsoberfläche in dem Tank zurück zu dem Füllstandsensor reflektiert werden, so dass durch eine Laufzeitmessung der Wellen eine Füllstandmessung erfolgen kann, wobei die Fördereinheit zumindest ein zusätzliches Sensormittel aufweist, durch welches festgestellt werden kann, ob in dem Tank eingefrorenes Additiv vorliegt
Mit Hilfe der Laufzeitmessung kann eine besonders genaue Bestimmung einer Strecke zu einer Flüssigkeitsoberfläche und zurück und damit eine besonders genaue Bestimmung eines Füllstands in einem Tank mit flüssigem Additiv durchgeführt werden, wenn die Ausbreitungsgeschwindigkeit der Wellen in dem flüssigen Additiv bekannt ist. Die Ausbreitungsgeschwindigkeit kann beispielsweise über eine Messung ermittelt werden. Die Ausbreitungsgeschwindigkeit kann auch als ein in einem elektronischen Speicher hinterlegter Wert bereitgestellt werden.

Die Fördereinheit ist vorzugsweise in einer Öffnung eines Tankbodens des Tanks montiert. Die Fördereinheit erstreckt sich vorzugsweise ausgehend vom Tankboden in einen Innenraum des Tanks hinein. Die Öffnung am Tankboden hat vorzugsweise einen Flansch, in welchen die Fördereinheit eingesetzt ist und gegen welchen die Fördereinheit fluiddicht angeordnet werden kann, so dass kein flüssiges Additiv aus dem Tank hinauslaufen kann. An der Fördereinheit ist vorzugsweise eine Ansaugstelle vorgesehen, an welcher die Fördereinheit flüssiges Additiv aus dem Tank entnehmen kann. Die Fördereinheit weist vorzugsweise zusätzlich eine Abgabestelle auf, an welcher flüssiges Additiv (außerhalb des Tanks) abgegeben werden kann und von wo aus es zu einer Abgasbehandlungsvorrichtung und/oder einem Verbraucher/Konditionierer gelangen kann. Die Abgabestelle ist regelmäßig als ein (normierter) Anschluss ausgeführt, an welchen eine Förderleitung für das flüssige Additiv angeschlossen werden kann.

Die Fördereinheit umfasst vorzugsweise ein Gehäuse, an dem die Ansaugstelle angeordnet ist. Dabei trennt das Gehäuse einen Innenraum des Tanks und einen Innenraum der Fördereinheit praktisch voneinander ab, so dass das Gehäuse innen (mit Ausnahme der dafür vorgesehenen Leitungen) frei von Additiv ist. In dem Gehäuse sind funktionale Komponenten angeordnet, mit denen die Fördereinheit das flüssige Additiv fördert bzw. behandelt. Solche Komponenten können beispielsweise zumindest eine Pumpe, zumindest ein Ventil und/oder zumindest ein Filter sein. Gegebenenfalls sind in dem Gehäuse auch Komponenten angeordnet, mit denen die Förderung von flüssigem Additiv und/oder sonstige Parameter der Fördereinheit überwacht werden können. Solche Komponenten können beispielsweise zumindest ein Temperatursensor oder zumindest ein Drucksensor sein.

Der Füllstandsensor ist an der Fördereinheit vorzugsweise so eingerichtet, dass er bei typischer Einbauausrichtung der Fördereinheit in einem Tank für flüssiges Additiv nach oben (parallel zur Schwerkraft) ausgerichtet ist und dazu eingerichtet ist, (optische, akustische, elektromagnetische,..) Wellen in Richtung parallel zur Schwerkraft auf eine Flüssigkeitsoberfläche auszustrahlen. Dann ist eine besonders präzise Messung der Laufzeit für Wellen zu der Flüssigkeitsoberfläche und zurück möglich. Es ist insbesondere nicht notwendig, eine längere Laufzeit zu berücksichtigen, die auftritt, weil die Wellen unter einem Winkel auf die Flüssigkeitsoberfläche treffen. Außerdem ist sichergestellt, dass die Wellen an der Flüssigkeitsoberfläche zu einem großen Anteil parallel wieder zurück zu dem Füllstandsensor reflektiert werden.

Die Wellen werden von dem Füllstandsensor vorzugsweise in einen (ggf. teilweise separierten) Abstrahlbereich abgestrahlt. Der Abstrahlbereich ist ein kegelförmiger Bereich, der sich ausgehend von dem Füllstandsensor erstreckt und welcher einen Öffnungswinkel von beispielsweise weniger 20 [Grad], vorzugsweise zwischen 1° und 10 hat. Die Achse dieses Kegels entspricht vorzugsweise der senkrechten Richtung von dem Füllstandsensor zu der Flüssigkeitsoberfläche. Der Füllstandsensor ist dazu eingerichtet Flächen oder Objekte zu registrieren, die in diesem Abstrahlbereich liegen.

An der Fördereinheit bzw. an einem Gehäuse der Fördereinheit ist vorzugsweise auch zumindest eine Referenzmarke vorgesehen, die sich in den Abstrahlbereich hinein erstreckt. An dieser Referenzmarke wird ein Teil der abgestrahlten Wellen auch zurück zu dem Füllstandsensor reflektiert. Es kann so auch eine Laufzeitmessung von Wellen zu der Referenzmarke und zurück zu dem Füllstandsensor erfolgen. Die Strecke von dem Füllstandsensor zu der Referenzmarke ist vorzugsweise genau bekannt. Durch die Laufzeitmessung zu der Referenzmarke und zurück kann dann die Ausbreitungsgeschwindigkeit der Wellen in dem flüssigen Additiv bestimmt werden. Die so bestimmte Ausbreitungsgeschwindigkeit kann zur Berechnung des Füllstandes aus der Laufzeit zu der Flüssigkeitsoberfläche verwendet werden. So können Quereinflüsse auf die Ausbreitungsgeschwindigkeit aufgrund von Eigenschaftsänderungen des flüssigen Additivs erkannt und minimiert werden. Derartige Quereinflüsse sind beispielsweise die Temperatur des flüssigen Additivs und/oder die Zusammensetzung des flüssigen Additivs. Wenn das flüssige Additiv Harnstoff-Wasser-Lösung ist, unterscheidet sich die Geschwindigkeit des Wellensignals beispielsweise in Abhängigkeit der Konzentration des Harnstoffs.

Es hat sich herausgestellt, dass insbesondere wenn in dem Tank flüssiges Additiv in eingefrorenem Zustand vorliegt, ein Füllstandsensor, welcher zur Füllstandmessung Wellen abstrahlt, fehlerhafte Messsignale weiterleitet. Dies kann teilweise daran liegen, dass die Laufzeiten von Wellen und insbesondere von Ultraschallwellen, in flüssigem Additiv und in eingefrorenem Additiv bzw. im Eis sehr unterschiedlich sind. Zusätzlich finden an (weiter im Tankinneren liegenden) Grenzflächen zwischen eingefrorenem Additiv und flüssigem Additiv Reflexionen von Wellen statt, welche dazu führen können, dass gar nicht die Flüssigkeitsoberfläche von dem Füllstandsensor erfasst wird, sondern eine Laufzeitmessung zu einer beliebig angeordneten Eisoberfläche innerhalb des Additivs stattfindet. Daher hat es sich als vorteilhaft herausgestellt zusätzlich zu dem Füllstandsensor ein (weiteres) Sensormittel an der Fördereinheit vorzusehen, welches (vorzugsweise binär) überwacht, ob in dem Tank eingefrorenes Additiv vorliegt oder nicht. Mit einer "binären" Überwachung ist insbesondere gemeint, dass dieses zusätzliche Sensormittel vorzugsweise nur zwei verschiedene Zustände erkennt, nämlich ob eingefrorenes flüssiges Additiv vorliegt oder nicht. Durch ein derartiges zusätzliches Sensormittel kann die vom Füllstandsensor ermittelte Füllstandsinformation sehr viel genauer und sehr viel zuverlässiger ausgewertet werden.

Weiterhin vorteilhaft ist die Fördereinheit, wenn der Füllstandsensor ein Ultraschallsensor ist.

Ein Ultraschallsensor sendet und empfängt Ultraschallwellen. Mit Ultraschallwellen werden typischerweise Schallwellen in einem Frequenzbereich von mehr als 16 kHz bezeichnet. Besonders bevorzugt wird ein Ultraschallsensor verwendet der Ultraschallwellen in einem Frequenzbereich zwischen 20 kHz und 20 MHz aussendet. Es hat sich herausgestellt, dass mit einem derartigen Ultraschallsensor (insbesondere wenn das flüssige Additiv Reduktionsmittel und besonders bevorzugt wässrige Harnstoff-Lösung ist) eine besonders präzise Messung einer Laufzeit durchgeführt werden kann.

Besonders vorteilhaft ist die Fördereinheit, wenn diese am Tankboden des Tanks montiert werden kann und das zusätzliche Sensormittel weiter von dem Tankboden entfernt angeordnet ist als der Füllstandsensor.

Der Füllstandsensor sollte an der Fördereinheit möglichst derart angeordnet sein, dass er möglichst nahe an dem Tankboden positioniert ist. Dies ist vorteilhaft, weil so auch ein besonders niedriger Füllstand in dem Tank noch zuverlässig erkannt werden kann. Der Füllstandsensor kann regelmäßig nur den Füllstand des flüssigen Additivs in dem Tank überwachen, wenn das flüssige Additiv mit seiner Flüssigkeitsoberfläche höher in dem Tank steht als der Füllstandsensor ist. Daher sollte der Füllstandsensor möglichst tief im Tank angeordnet ein. Daher ist es auch sinnvoll, wenn das zusätzliche Sensormittel oberhalb des Füllstandsensors angeordnet ist. So kann vermieden werden, dass der enge Bauraum am Boden des Tanks bzw. der Fördereinheit mit dem zusätzlichen Sensormittel blockiert wird. Ebenso kann dann ggf. abgestimmt auf das Einfrierverhalten des Additivs im Tank auch eine Position gewählt werden, bei der Eis sicher und/oder frühzeitig(er) erkannt werden kann.

Weiterhin ist die Fördereinheit so gestaltet, dass das zusätzliche Sensormittel zumindest einen elektrischen Kontakt aufweist, mit dem zumindest eine der folgenden Messungen durchgeführt werden kann:
- eine Leitfähigkeitsmessung des flüssigen Additivs in dem Tank;
- eine Messung der elektrischen Kapazität des flüssigen Additivs in dem Tank; und
- eine Messung der elektrischen Induktivität des flüssigen Additivs in dem Tank.

Die beschriebenen Messungen überprüfen jeweils die elektrischen Eigenschaften des Additivs im Bereich des zusätzlichen Sensormittels. Diese elektrischen Eigenschaften können sich sehr stark voneinander unterscheiden, je nachdem, ob das flüssige Additiv eingefroren ist oder nicht. In eingefrorenem Zustand ist die elektrische Leitfähigkeit des flüssigen Additivs auch signifikant verändert, weil die Moleküle des flüssigen Additivs nicht mehr frei beweglich sind. Daher kann anhand einer Leitfähigkeitsmessung unterschieden werden, ob flüssiges Additiv oder eingefrorenes Additiv vorliegt. Genauso sind auch die elektrische Kapazität und die elektrische Induktivität des Additivs signifikant unterschiedlich, je nachdem, ob es in flüssigem Aggregatszustand oder in festen Aggregatszustand in dem Tank vorliegt. Ein solches elektrisches Sensormittel kann besonders kostengünstig ausgeführt sein und bietet sich daher an, um die weiter oben beschriebene binäre Überwachung mit dem Sensormittel durchzuführen.

Weiterhin ist die Fördereinheit vorteilhaft, wenn das zusätzliche Sensormittel zumindest einen Temperatursensor und eine Heizung aufweist und dazu eingerichtet ist, eine Messung der thermischen Kapazität des Additivs in dem Tank durchzuführen.

Der Temperatursensor und die (elektrische) Heizung sind bei dem Sensormittel bevorzugt in einem sehr geringen Abstand zueinander angeordnet. Zur Bestimmung der thermischen Kapazität wird die Heizung des Sensormittels kurzzeitig betrieben. Mit dem Temperatursensor wird
überwacht, inwieweit die Temperatur durch den Betrieb der benachbarten Heizung ansteigt. Dieser Temperaturanstieg (Verlauf, Geschwindigkeit, absolute Werte, etc.) unterscheidet sich stark je nachdem, ob in der Nähe des Sensormittels flüssiges Additiv oder gefrorenes Additiv vorliegt. Dies liegt daran, dass die thermische Kapazität des Additivs unterschiedlich ist, je nachdem, ob es in eingefrorenem Zustand oder in flüssigem Zustand vorliegt. Wenn die thermische Kapazität groß ist, wird relativ viel Heizenergie benötigt, um einen bestimmten Temperaturanstieg an dem Temperatursensor zu gewährleisten. Wenn die thermische Kapazität klein ist, kann bereits mit einer geringen Heizleistung ein entsprechender Temperaturanstieg erreicht werden. Ein derartiges Sensormittel ist besonders kostengünstig und zuverlässig. Zusätzlich ist es mit einem derartigen Sensormittel auch möglich, eine genauere Information über den Zustand des flüssigen Additivs zu gewinnen, welche über die bloße Erkennung, ob das Additiv in flüssigem oder in eingefrorenem Zustand vorliegt, hinausgehen.

Weiterhin wird eine Fördereinheit als vorteilhaft angesehen, wenn das Sensormittel dazu geeignet ist, Wellen abzustrahlen und zu empfangen, welche von eingefrorenem Additiv zurück zu dem Sensormittel reflektiert werden, so dass durch eine Laufzeitmessung der Wellen festgestellt werden kann, ob in dem Tank eingefrorenes Additiv vorliegt.

Ein derartiges Sensormittel ist vorzugsweise ebenfalls ein Ultraschallsensor, welcher in einer besonders bevorzugten Ausführungsvariante genauso aufgebaut sein kann, wie der Ultraschallsensor, welcher auch zur Füllstandmessung als Füllstandsensor verwendet wird. Dies erhöht die Anzahl an gleichartig ausgeführten Bauteilen innerhalb der Fördereinheit und somit zu einer besonders kostengünstigen Gestaltung der Fördereinheit. Das Sensormittel kann beispielsweise so konzipiert und eingerichtet sein, dass unmittelbar an einer (seitlichen) Tankwand vorliegendes eingefrorenes Additiv zu einer (z.B. etwa horizontalen) Reflektion führt, die von dem Sensormittel erfasst wird. Wenn das Additiv in flüssigem Zustand vorliegt findet eine derartige Reflektion nicht statt, sondern die von dem Sensormittel abgestrahlten Wellen treffen erst sehr viel später zurück auf das Sensormittel, weil sie beispielsweise an einer Wand des Tanks reflektiert werden. Wenn ein derartiges Sensormittel (das Wellen abstrahlen und empfangen kann) in der Fördereinheit zu diesem Zweck eingesetzt wird, ist es vorteilhaft, wenn dieses Sensormittel an der Fördereinheit so eingebaut ist, dass es im montierten Zustand der Fördereinheit an einem Tank waagerecht (horizontal) ausgerichtet ist und somit eine waagerechte Laufzeitmessung von Wellen in dem flüssigen Additiv vornimmt. So kann sichergestellt werden, dass der Füllstand an flüssigem Additiv in dem Tank keinen Quereinfluss auf die Messung mit dem zusätzlichen Sensormittel hat.

Weiterhin ist die Fördereinheit vorteilhaft, wenn das Sensormittel eine Umlenkstrecke durch die Fördereinheit zu einer Messstelle für Wellen von dem Füllstandsensor ist, wobei durch eine Laufzeitmessung von Wellen, die an der Messstelle reflektiert werden, festgestellt werden kann, ob in dem Tank eingefrorenes Additiv vorliegt.
Bei dieser Ausführungsvariante weist das Sensormittel vorzugsweise keine eigene Messeinheit auf, sondern der Füllstandsensor wird parallel/zugleich auch dazu verwendet, um als Sensormittel zu wirken und festzustellen, ob in dem Tank eingefrorenes Additiv vorliegt oder nicht. Vorzugsweise ist der Füllstandsensor dazu konzipiert und eingerichtet, nicht nur Wellen in den Tank und damit in das flüssige Additiv in den Tank hinein abzustrahlen und Reflektionen dieser Wellen zu empfangen, sondern der Füllstandsensor sendet teilweise auch innerhalb der Fördereinheit Wellen ab. In der Fördereinheit ist dann eine Umlenkstrecke vorgesehen, mit deren Hilfe die Wellen zu der Messstelle gelenkt/geführt werden. Die Umlenkstrecke ist vorzugsweise mit einem Wellenleiter gebildet, welcher die Wellen von dem Füllstandsensor zu der Messstelle leitet und/oder durch mindestens ein Umlenkmittel, welches die Wellen innerhalb der Fördereinheit zu der Messstelle umlenkt.

Die Erfindung findet insbesondere Anwendung bei einem Tank zur Speicherung eines flüssigen Additivs, aufweisend einen Tankboden, an welchem die beschriebene Fördereinheit angeordnet ist. Ein derartiger Tank kann für ein Kraftfahrzeug beispielsweise mit der Fördereinheit vormoniert und dann in ein Kraftfahrzeug eingesetzt werden.

Folglich wird auch ein Kraftfahrzeug vorgeschlagen, aufweisend eine Verbrennungskraftmaschine, eine Abgasbehandlungsvorrichtung zur Reinigung der Abgase der Verbrennungskraftmaschine, einen Tank zur Speicherung eines flüssigen Additivs sowie eine Fördereinheit zur Förderung des flüssigen Additivs aus dem Tank in die Abgasbehandlungsvorrichtung. Dabei handelt es sich insbesondere um einen Tank zur Speicherung von wässriger Harnstoff-Lösung (oder einem entsprechenden Reduktionsmittel) für die Durchführung des SCR-Verfahrens in der Abgasbehandlungsvorrichtung, wobei die wässrige Harnstoff-Lösung mittels eines Injektors vor einem SCR-Katalysator in die Abgasbehandlungsvorrichtung und damit in das Abgas zudosiert wird. Das Kraftfahrzeug umfasst dabei bevorzugt eine Kontrolleinheit, mit der die Daten aus dem Füllstandsensor und dem zusätzlichen Sensormittel verarbeitet werden können und die den Betrieb der Fördereinheit und/oder des Injektors reguliert, wobei ggf. auch Kennwerte des Abgases und/oder der Verbrennungskraftmaschine berücksichtigt werden.

Weiterhin wird ein Verfahren zur Bestimmung einer Füllmenge an flüssigem Additiv in einem Tankangegeben, aufweisend zumindest die folgenden Schritte:
a) Absenden eines Wellensignals in das flüssige Additiv in den Tank mit einem Füllstandsensor und Aktivieren eines Zeitzählers;
b) Empfangen von zumindest einem Antwortsignal auf das Wellensignal mit dem Füllstandsensor und Bestimmen von zumindest einer Laufzeit des Füllstandsignals, und
c) Berechnen der Füllmenge in dem Tank aus der zumindest einen Laufzeit;
wobei weiter die folgenden Schritte durchgeführt werden:
i) Verwenden eines zusätzlichen Sensormittels, um zu überprüfen, ob in dem Tank eingefrorenes Additiv vorliegt, wenn in Schritt c) eine Füllmenge ermittelt wurde, die kleiner ist als eine vorgegebene Restfüllmenge, und
ii) Korrigieren der ermittelten Füllmenge, wenn in Schritt i) eingefrorenes Additiv festgestellt wurde, wobei
das Sensormittel zumindest einen elektrischen Kontakt aufweist, mit dem zumindest eine der folgenden Messungen durchgeführt werden kann:
- eine Leitfähigkeitsmessung des flüssigen Additivs in dem Tank;
- eine Messung der elektrischen Kapazität des flüssigen Additivs in dem Tank; und
- eine Messung der elektrischen Induktivität des flüssigen Additivs in dem Tank.

Durch die Verfahrensschritte a) bis c) wird eine Messung der Strecke/Laufzeit des Wellensignals durch das flüssige Additiv von dem Füllstandsensor zu einer Flüssigkeitsoberfläche und zurück durchgeführt. Die Messung der Strecke erfolgt über die Laufzeitmessung unter Berücksichtigung der Tatsache, dass die Geschwindigkeit des Wellensignals in dem flüssigen Additiv bekannt (und z. B. in einer Kontrolleinheit abrufbar) ist. Zusätzlich zu der in den Schritten a) bis c) durchgeführten Laufzeitmessung zur Bestimmung des Füllstandes kann eine weitere Laufzeitmessung stattfinden, welche beispielsweise die Strecke/Laufzeit eines Wellensignals zu einer (anderen) Referenzmarke und zurück zu dem Füllstandsensor ermittelt, um die Ausbreitungsgeschwindigkeit der Wellen in dem flüssigen Additiv (separat) zu bestimmen. Dies ermöglicht, die Messung des Abstands der Flüssigkeitsoberfläche von dem Füllstandsensor unabhängig von der (aktuell bzw. zeitgleich) gemessenen Geschwindigkeit des Wellensignals in dem flüssigen Additiv durchzuführen.

Weiterhin ist vorgesehen, mit dem zusätzlichen Sensormittel zu überwachen/prüfen, ob in dem Tank eingefrorenes Additiv oder flüssiges Additiv vorliegt. Dies geschieht in Schritt i).

Zum Korrigieren der ermittelten Füllmenge in Schritt ii) können verschiedene zusätzliche Parameter verwendet werden, wenn in Schritt i) festgestellt wurde, dass im Tank eingefrorenes flüssiges Additiv vorliegt. Beispielsweise kann aus einem elektronischen Speicher (der Kontrolleinheit) ein zuvor ermittelter Füllstandswert ausgelesen werden, welche bestimmt wurde, als in dem Tank sicher noch flüssiges Additiv vorlag. Anstatt des in Schritt i) ermittelten Füllstandswerts kann dann der in dem Speicher vorliegende Füllstandswert eingesetzt werden, welcher zumindest eine (zeitnahe) relativ genaue Einschätzung des tatsächlichen Füllstands in
dem Tank ermöglicht. Weiterhin ist es möglich, dass in Schritt ii) die Füllmenge auf eine Füllmenge korrigiert wird, welche zumindest vorliegen muss, damit an dem Sensormittel überhaupt eingefrorenes Additiv vorliegen kann. Weiter oben wurde beschrieben, dass das Sensormittel vorzugsweise oberhalb des Füllstandsensors angeordnet ist. Mit dem Sensormittel kann daher nur eingefrorenes Additiv festgestellt werden, wenn die Flüssigkeitsoberfläche oberhalb des Sensormittels ist. Daher ist die Messung von eingefrorenem Additiv an dem Sensormittel für eine bestimmte Mindestrestmenge an Additiv in dem Tank repräsentativ.

Die Verfahrensschritte i) und ii) können (zumindest teilweise) zeitlich vor oder nach den Verfahrensschritten a) bis c) durchgeführt werden. Wenn die Verfahrensschritte i) und ii) zuerst durchgeführt werden, ist es gemäß einer besonders vorteilhaften Ausführungsvariante des Verfahrens auch möglich das Verfahren abzubrechen, wenn festgestellte wird, dass in dem Tank eingefrorenes flüssiges Additiv vorliegt.

Das beschriebene Verfahren kann insbesondere mit einer weiter oben beschriebenen Fördereinheit durchgeführt werden, die dann insbesondere eingerichtet und konzipiert ist zur Durchführung des Verfahrens. Die für das beschriebene Verfahren dargestellten besonderen Vorteile und Ausgestaltungsmerkmale sind in entsprechender Weise auf die beschriebene Fördereinheit anwendbar und übertragbar. Gleiches gilt für die für die beschriebene Fördereinheit dargestellten besonderen Vorteile und Ausgestaltungsmerkmale, die in entsprechender Weise auf das beschriebene Verfahren anwendbar und übertragbar sind.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: einen Tank mit einer ersten Ausführungsvariante einer Fördereinheit,
- Fig. 2:: einen Tank mit einer zweiten Ausführungsvariante einer Fördereinheit,
- Fig. 3:: einen Tank mit einer dritten Ausführungsvariante einer Fördereinheit,
- Fig. 4:: ein Ablaufdiagramm eines Verfahrens zur Bestimmung einer Füllmenge in einem Tank, und
- Fig. 5:: ein Kraftfahrzeug.

Soweit in den Figuren gleiche Bauteile dargestellt sind, weisen diese dasselbe Bezugszeichen auf, auch wenn sie in der konkreten Konfiguration unterschiedlich ausgeführt sein können. Die Figuren werden daher zunächst auch teilweise gemeinsam erläutert, soweit dort ein ähnlicher Aufbau und/oder ähnliche Komponenten dargestellt sind.

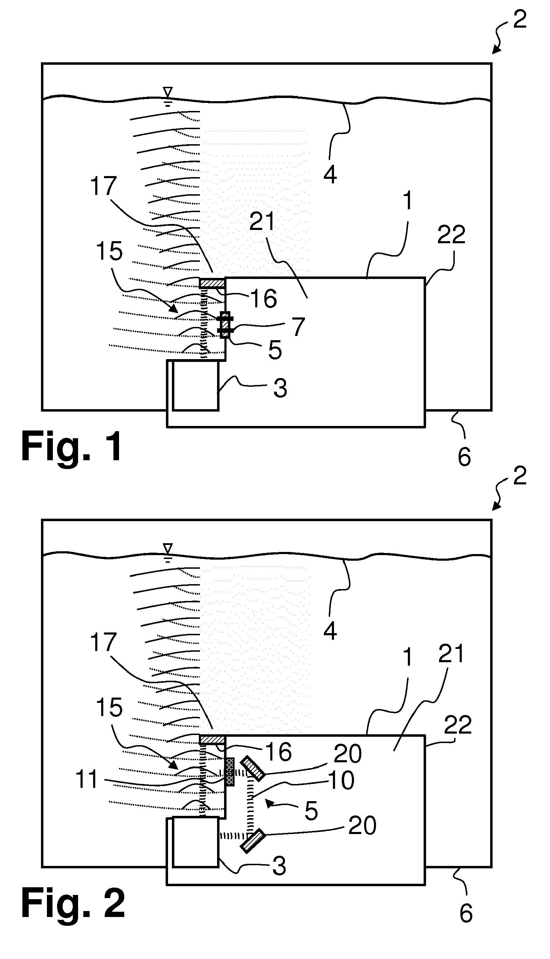

In den Fig. 1, 2 und 3 ist jeweils ein Tank 2 dargestellt, in dessen Tankboden 6 eine Fördereinheit 1 eingesetzt ist. Die Fördereinheit 1 weist jeweils einen Füllstandsensor 3 (insbesondere ein Ultraschallsensor) auf, mit welchem der Füllstand an flüssigem Additiv (insbesondere wässrige Harnstoff-Lösung) in dem Tank 2 ermittelt werden kann. Dazu sendet der Füllstandsensor 3 in einen Abstrahlbereich 15 Wellen aus, welche von einer Flüssigkeitsoberfläche 4 des flüssigen Additivs in dem Tank 2 reflektiert und zurück zu dem Füllstandsensor 3 gesendet werden. So kann über eine Laufzeitmessung der Wellen (Zeitspanne zwischen Absenden und Empfangen der Wellen) zur Flüssigkeitsoberfläche 4 und zurück zum Füllstandsensor 3 eine Bestimmung des Füllstands an flüssigem Additiv im Tank 2 vorgenommen werden. Der Abstrahlbereich 15 kann auch teilweise mit einer Abdeckung 17 ausgeführt sein, die am Gehäuse 22 angebracht ist. So kann die Wellenausbreitung begrenzt und/oder der Füllstandsensor 3 geschützt werden. Dabei ist die Abdeckung 17 insbesondere (teilweise) gegenüberliegend vom Füllstandsensor 3 angeordnet, bevorzugt am Gehäuse 22 mit dem größtmöglichen Abstand.

Die Fördereinheit 1 weist ein Gehäuse 22 auf, welches einen Innenraum der Fördereinheit 1 begrenzt. Der Füllstandsensor 3 ist in diesem Innenraum 21 angeordnet. An der Fördereinheit 1 ist beispielsweise eine Referenzmarke 16 vorgesehen, welche sich in den Abstrahlbereich 15 des Füllstandsensors 3 hinein erstreckt und welche ebenfalls einen Teil der von dem Füllstandsensor 3 ausgesendeten Wellen reflektiert, so dass eine Laufzeitmessung für die Reise der Wellen hin zu der Referenzmarke 16 und zurück zu dem Füllstandsensor 3 durchgeführt werden kann. Durch diese zusätzliche Laufzeitmessung kann die Laufzeitmessung zu der Flüssigkeitsoberfläche 4 korrigiert werden, um Quereinflüsse durch die aktuellen Eigenschaften des flüssigen Additivs (wie beispielsweise die Temperatur oder die Zusammensetzung) zu eliminieren.

An der Fördereinheit 1 ist ein zusätzliches Sensormittel 5 vorgesehen, mit welchem überwacht/ermittelt werden kann, ob das in dem Tank 2 vorliegende Additiv in flüssigem Zustand oder in festem (eingefrorenen) Zustand vorliegt.

Das zusätzliche Sensormittel 5 ist gemäß den Ausführungsvarianten in den Fig. 1, 2 und 3 jeweils unterschiedlich ausgestaltet, wie es nachfolgend erläutert wird, ohne hier zwingend nur alternative Ausprägungen anzugeben.

Gemäß Fig. 1 weist das Sensormittel 5 elektrische Kontakte 7 auf, mit welchen eine elektrische Messung (bspw. eine Leitfähigkeitsmessung des flüssigen Additivs, eine Messung der Kapazität des flüssigen Additivs und/oder eine Messung der elektrischen Induktivität des flüssigen Additivs) durchgeführt werden kann.

Gemäß der Fig. 2 ist innerhalb der Fördereinheit 1 eine Umlenkstrecke 10 vorgesehen, mit der ein Teil der von dem Füllstandsensor 3 ausgesandten Wellen hin zu einer Messstelle 11 umgelenkt werden kann. Mittels der aktuellen Gegebenheit an der Messstelle 11 kann so festgestellt werden, ob flüssiges Additiv oder eingefrorenes Additiv vorliegt. Je nachdem, ob das Additiv eingefroren ist oder nicht, findet an der Messstelle eine Reflektion der Wellen statt oder nicht. Wenn eine Reflektion stattfindet, werden die Wellen über die Umlenkstrecke 10 zurück zu dem Füllstandsensor 3 reflektiert. Die Umlenkstrecke 10 ist durch Umlenkmittel 20 (wie beispielsweise ein Reflektor oder dergleichen) gekennzeichnet, welche die Wellen innerhalb der Fördereinheit 1 bzw. innerhalb des Innenraums 21 des Gehäuses 22 auf der Umlenkstrecke 10 umlenken.

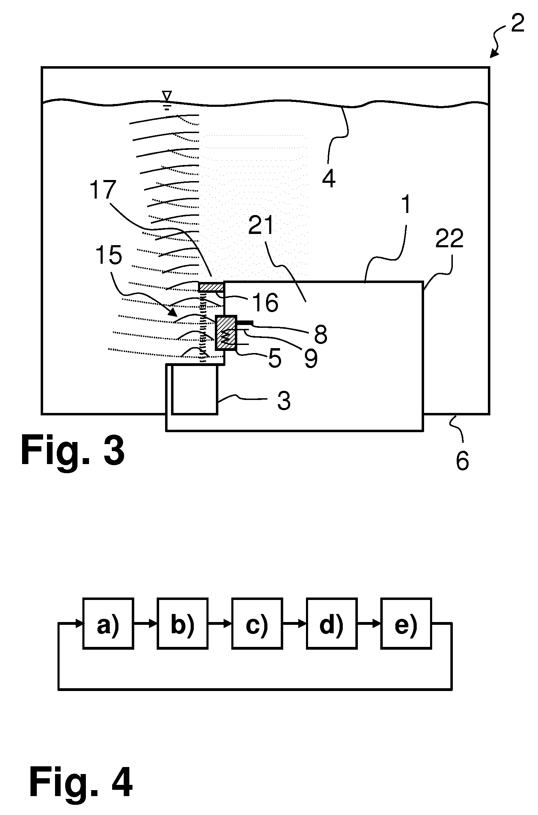

Gemäß Fig. 3 ist das Sensormittel 5 mit einem Temperatursensor 8 und einer Heizung 9 ausgeführt, welche gemeinsam eine Messung der thermischen Kapazität des Additivs in dem Tank durchführen können.

Fig. 4 veranschaulicht beispielhaft ein Ablaufdiagramm des beschriebenen Verfahrens zur Bestimmung der Füllmenge an flüssigem Additiv in dem Tank. Zu erkennen sind die Verfahrensschritte a), b), c), d) und e), welche nach Art einer Schleife iterativ wiederholt werden können, um den Füllstand in dem Tank regelmäßig (in vorgegebenen Intervallen und/oder bedarfsorientiert) zu überwachen und so aktuelle Informationen über die Füllmenge an flüssigem Additiv in dem Tank bereitstellen zu können.

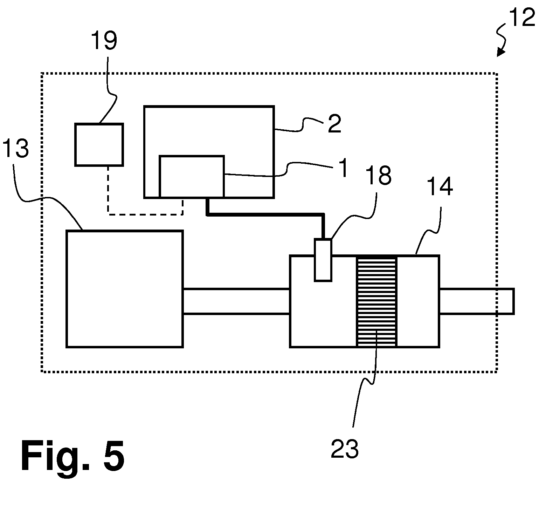

Fig. 5 zeigt ein Kraftfahrzeug 12, aufweisend eine Verbrennungskraftmaschine 13 und eine Abgasbehandlungsvorrichtung 14 zur Reinigung der Abgase der Verbrennungskraftmaschine 13. In die Abgasbehandlungsvorrichtung 14 ist flüssiges Additiv (wässrige Harnstoff-Lösung) mit einer Zufuhrvorrichtung 18 (z. B. einem kontrolliert betätigbaren Injektor) zuführbar. In der Abgasbehandlungsvorrichtung 14 ist vorzugsweise ein SCR-Katalysator 23 vorgesehen, mit welchem Stickstoffoxidverbindungen im Abgas der Verbrennungskraftmaschine 13 zusammen mit dem über die Zufuhrstelle 18 zugeführten flüssigen Additiv reduziert werden können. Die Zufuhrvorrichtung 18 wird mit einer Fördereinheit 1 mit flüssigem Additiv aus einem Tank 2 versorgt. Zusätzlich vorgesehen ist eine Kontrolleinheit 19, welche eine Füllstandmessung mit der Fördereinheit 1 überwacht, und welche gegebenenfalls dazu eingerichtet ist, das oben beschriebene Verfahren zur Bestimmung der Füllmenge an flüssigem Additiv in dem Tank durchzuführen.

### Bezugszeichenliste

- 1: Fördereinheit
- 2: Tank
- 3: Füllstandsensor
- 4: Flüssigkeitsoberfläche
- 5: Sensormittel
- 6: Tankboden
- 7: elektrischer Kontakt
- 8: Temperatursensor
- 9: Heizung
- 10: Umlenkstrecke
- 11: Messstelle
- 12: Kraftfahrzeug
- 13: Verbrennungskraftmaschine
- 14: Abgasbehandlungsvorrichtung
- 15: Abstrahlbereich
- 16: Referenzmarke
- 17: Abdeckung
- 18: Zufuhrvorrichtung
- 19: Kontrolleinheit
- 20: Umlenkmittel
- 21: Innenraum
- 22: Gehäuse
- 23: SCR-Katalysator

## Patentansprüche

1. Fördereinheit (1) zur Förderung eines flüssigen Additivs aus einem Tank (2), welche in dem Tank (2) montiert werden kann aufweisend einen Füllstandsensor (3), welcher Wellen abstrahlen und empfangen kann, die an einer Flüssigkeitsoberfläche (4) in dem Tank (2) zurück zu dem Füllstandsensor (3) reflektiert werden, so dass durch eine Laufzeitmessung der Wellen eine Füllstandmessung erfolgen kann, wobei die Fördereinheit (1) zumindest ein zusätzliches Sensormittel (5) aufweist, und die Fördereinheit so ausgestaltet ist, dass mit dem zusätzlichen Sensormittel (5) festgestellt werden kann, ob in dem Tank (2) eingefrorenes Additiv vorliegt, **dadurch gekennzeichnet, dass** das zusätzliche Sensormittel (5) zumindest einen elektrischen Kontakt (7) aufweist, mit dem zumindest eine der folgenden Messungen durchgeführt werden kann:
- eine Leitfähigkeitsmessung des flüssigen Additivs in dem Tank (2);
- eine Messung der elektrischen Kapazität des flüssigen Additivs in dem Tank (2); und
- eine Messung der elektrischen Induktivität des flüssigen Additivs in dem Tank (2).

2. Fördereinheit (1) nach dem vorhergehenden Patentanspruch, wobei der Füllstandsensor (3) ein Ultraschallsensor ist.

3. Fördereinheit (1) nach einem der vorhergehenden Patentansprüche, wobei die Fördereinheit (1) am Tankboden (6) des Tanks (2) montiert werden kann und das zusätzliche Sensormittel (5) weiter von dem Tankboden (6) entfernt angeordnet ist als der Füllstandsensor (3).

4. Fördereinheit (1) nach einem der Patentansprüche 1 bis 3, wobei das Sensormittel (5) zumindest einen Temperatursensor (8) und eine Heizung (9) aufweist, und dazu eingerichtet ist, eine Messung der thermischen Kapazität des Additivs in dem Tank (2) durchzuführen.

5. Fördereinheit (1) nach einem der Patentansprüche 1 bis 3, wobei das Sensormittel (5) dazu geeignet ist Wellen abzustrahlen und zu empfangen, welche von eingefrorenem Additiv zurück zu dem Sensormittel (5) reflektiert werden, so dass durch eine Laufzeitmessung der Wellen festgestellt werden kann, ob in dem Tank (2) eingefrorenes Additiv vorliegt.

6. Fördereinheit (1) nach einem der Patentansprüche 1 bis 3, wobei das Sensormittel (5) eine Umlenkstrecke (10) durch die Fördereinheit zu einer Messstelle (11) für Wellen von dem Füllstandsensor (3) ist, wobei durch eine Laufzeitmessung von Wellen, die an der Messstelle (11) reflektiert werden, festgestellt werden kann, ob in dem Tank (2) eingefrorenes Additiv vorliegt.

7. Tank (2) zur Speicherung eines flüssigen Additivs, aufweisend einen Tankboden (6) an welchem eine Fördereinheit (1) nach einem der vorhergehenden Patentansprüche angeordnet ist.

8. Kraftfahrzeug (12), aufweisend eine Verbrennungskraftmaschine (13), eine Abgasbehandlungsvorrichtung (14) zur Reinigung der Abgase der Verbrennungskraftmaschine (13), einen Tank (2) zur Speicherung eines flüssigen Additivs sowie eine Fördereinheit (1) nach einem der Patentansprüche 1 bis 6 zur Förderung des flüssigen Additivs aus dem Tank (2) in die Abgasbehandlungsvorrichtung (14).

9. Verfahren zur Bestimmung einer Füllmenge an flüssigem Additiv in einem Tank (2) aufweisend zumindest die folgenden Schritte:
a) Absenden eines Wellensignals in das flüssige Additiv in den Tank (2) mit einem Füllstandsensor (3) und Aktivieren eines Zeitzählers;
b) Empfangen von zumindest einem Antwortsignal auf das Wellensignal mit dem Füllstandsensor (3) und Bestimmen von zumindest einer Laufzeit des Füllstandsignals, und
c) Berechnen der Füllmenge in dem Tank (2) aus der zumindest einen Laufzeit,
wobei weiter die folgenden Schritte durchgeführt werden:
i) Verwenden eines zusätzlichen Sensormittels (5), um zu überprüfen, ob in dem Tank (2) eingefrorenes Additiv vorliegt, wenn in Schritt c) eine Füllmenge ermittelt wurde, die kleiner ist als eine vorgegebene Restfüllmenge, und
ii) Korrigieren der ermittelten Füllmenge, wenn in Schritt i) eingefrorenes Additiv festgestellt wurde,
**dadurch gekennzeichnet, dass** das zusätzliche
Sensormittel (5) zumindest einen elektrischen Kontakt (7) aufweist, mit dem zumindest eine der folgenden Messungen durchgeführt werden kann:
- eine Leitfähigkeitsmessung des flüssigen Additivs in dem Tank (2);
- eine Messung der elektrischen Kapazität des flüssigen Additivs in dem Tank (2); und
- eine Messung der elektrischen Induktivität des flüssigen Additivs in dem Tank (2).

## Claims

1. Feed unit (1) for feeding a liquid additive from a tank (2), which feed unit (1) can be mounted in the tank (2), having a filling level sensor (3) which can emit and receive waves which are reflected back to the filling level sensor (3) at a surface (4) of liquid in the tank (2), with the result that a filling level measurement can be carried out by measuring the transit time of the waves, wherein the feed unit (1) has at least one additional sensor means (5) and the feed unit is configured in such a way that, with the additional sensor means (5) it is possible to determine whether there is frozen additive in the tank (2), **characterized in that** the additional sensor means (5) has at least one electrical contact (7) with which at least one of the following measurements can be carried out:
- a conductivity measurement of the liquid additive in the tank (2);
- a measurement of the electrical capacitance of the liquid additive in the tank (2); and
- a measurement of the electrical inductance of the liquid additive in the tank (2).

2. Feed unit (1) according to the preceding patent claim, wherein the filling level sensor (3) is an ultrasonic sensor.

3. Feed unit (1) according to one of the preceding patent claims, wherein the feed unit (1) can be mounted on the tank floor (6) of the tank (2), and the additional sensor means (5) is arranged further away from the tank floor (6) than the filling level sensor (3).

4. Feed unit (1) according to one of Patent Claims 1 to 3, wherein the sensor means (5) has at least one temperature sensor (8) and a heater (9) and is configured to carry out a measurement of the thermal capacity of the additive in the tank (2).

5. Feed unit (1) according to one of Patent Claims 1 to 3, wherein the sensor means (5) is suitable for emitting and receiving waves which are reflected back from the frozen additive to the sensor means (5), with the result that by measuring the transit time of the waves it is possible to determine whether there is frozen additive in the tank (2).

6. Feed unit (1) according to one of Patent Claims 1 to 3, wherein the sensor means (5) is a deflection distance (10) through the feed unit to a measurement point (11) for waves from the filling level sensor (3), wherein by measuring the transit time of waves which are reflected at the measurement point (11) it is possible to determine whether there is frozen additive in the tank (2).

7. Tank (2) for storing a liquid additive, having a tank floor (6) on which a feed unit (1) according to one of the preceding patent claims is arranged.

8. Motor vehicle (12), having an internal combustion engine (13), an exhaust gas treatment device (14) for purifying the exhaust gases of the internal combustion engine (13), a tank (2) for storing a liquid additive and a feed unit (1) according to one of Patent Claims 1 to 7 for feeding the liquid additive from the tank (2) into the exhaust gas treatment device (14).

9. Method for determining a filling quantity of liquid additive in a tank (2), having at least the following steps:
a) outputting a wave signal into the liquid additive in the tank (2) with a filling level sensor (3) and activating a timer;
b) receiving at least one response signal to the wave signal with the filling level sensor (3) and determining at least one transit time of the filling level signal, and
c) calculating the filling quantity in the tank (2) from the at least one transit time,
wherein the following steps are also carried out:
i) using an additional sensor means (5) to check whether there is frozen additive in the tank (2) if in step c) a filling quantity has been determined which is less than a predefined residual filling quantity, and
ii) correcting the determined filling quantity if frozen additive has been determined in step i), **characterized in that** the additional sensor means (5) has at least one electrical contact (7) with which at least one of the following measurements can be carried out:
- a conductivity measurement of the liquid additive in the tank (2);
- a measurement of the electrical capacitance of the liquid additive in the tank (2); and
- a measurement of the electrical inductance of the liquid additive in the tank (2).

## Revendications

1. Unité de transport (1) destinée à transporter un additif liquide depuis un réservoir (2), laquelle peut être montée dans le réservoir (2) et possédant un détecteur de niveau (3) qui peut émettre et recevoir des ondes qui sont réfléchies sur une surface de liquide (4) dans le réservoir (2) en retour vers le détecteur de niveau (3), de sorte qu'une mesure du niveau peut être effectuée par une mesure du temps de propagation des ondes, l'unité de transport (1) possédant au moins un moyen de détection supplémentaire (5) et l'unité de transport étant configurée de telle sorte que le moyen de détection supplémentaire (5) permet de définir si de l'additif gelé est présent dans le réservoir (2), **caractérisée en ce que** le moyen de détection supplémentaire (5) possède au moins un contact électrique (7) avec lequel peut être effectuée au moins l'une des mesures suivantes :
- une mesure de conductivité de l'additif liquide dans le réservoir (2) ;
- une mesure de la capacité électrique de l'additif liquide dans le réservoir (2) ; et
- une mesure de l'inductance électrique de l'additif liquide dans le réservoir (2).

2. Unité de transport (1) selon la revendication précédente, le détecteur de niveau (3) étant un détecteur à ultrasons.

3. Unité de transport (1) selon l'une des revendications précédentes, l'unité de transport (1) pouvant être montée sur le fond de réservoir (6) du réservoir (2) et le moyen de détection supplémentaire (5) étant disposé plus éloigné du fond de réservoir (6) que le détecteur de niveau (3).

4. Unité de transport (1) selon l'une des revendications 1 à 3, le moyen de détection (5) possédant au moins une sonde de température (8) et un dispositif de chauffage (9) et étant configuré pour effectuer une mesure de la capacité thermique de l'additif dans le réservoir (2).

5. Unité de transport (1) selon l'une des revendications 1 à 3, le moyen de détection (5) étant adapté pour émettre et recevoir des ondes, lesquelles sont réfléchies par de l'additif gelé en retour vers le moyen de détection (5), de sorte qu'une mesure du temps de propagation des ondes permet de définir si de l'additif gelé est présent dans le réservoir (2).

6. Unité de transport (1) selon l'une des revendications 1 à 3, le moyen de détection (5) étant un parcours de renvoi (10) à travers l'unité de transport vers un point de mesure (11) pour les ondes du détecteur de niveau (3), une mesure du temps de propagation des ondes qui sont réfléchies au niveau du point de mesure (11) permettant de définir si de l'additif gelé est présent dans le réservoir (2).

7. Réservoir (2) servant au stockage d'un additif liquide, possédant un fond de réservoir (6) sur lequel est disposée une unité de transport (1) selon l'une des revendications précédentes.

8. Véhicule automobile (12), équipé d'un moteur à combustion interne (13), d'un dispositif de traitement des gaz d'échappement (14) destiné à la purification des gaz d'échappement du moteur à combustion interne (13), d'un réservoir (2) servant au stockage d'un additif liquide ainsi que d'une unité de transport (1) selon l'une des revendications 1 à 6 destinée au transport de l'additif liquide depuis le réservoir (2) dans le dispositif de traitement des gaz d'échappement (14).

9. Procédé de détermination d'une quantité d'additif liquide présente dans un réservoir (2), comprenant au moins les étapes suivantes :
a) envoi d'un signal ondulatoire dans l'additif liquide dans le réservoir (2) avec un détecteur de niveau (3) et activation d'un compteur de temps ;
b) réception d'au moins un signal de réponse au signal ondulatoire avec le détecteur de niveau (3) et détermination d'au moins un temps de propagation du signal de niveau ; et
c) calcul de la quantité présente dans le réservoir (2) à partir de l'au moins un temps de propagation,
les étapes suivantes étant en outre exécutées :
i) utilisation d'un moyen de détection supplémentaire (5) afin de vérifier si de l'additif gelé est présent dans le réservoir (2), si la quantité qui a été déterminée à l'étape c) est inférieure à une quantité restante prédéfinie, et
ii) correction de la quantité déterminée si de l'additif gelé a été constaté à l'étape i),
**caractérisé en ce que** le moyen de détection supplémentaire (5) possède au moins un contact électrique (7) avec lequel peut être effectuée au moins l'une des mesures suivantes :
- une mesure de conductivité de l'additif liquide dans le réservoir (2) ;
- une mesure de la capacité électrique de l'additif liquide dans le réservoir (2) ; et
- une mesure de l'inductance électrique de l'additif liquide dans le réservoir (2).
